# EUROPÄISCHE PATENTSCHRIFT

(11) **EP 2 149 498 B1**
(45) Veröffentlichungstag und Bekanntmachung des Hinweises auf die Patenterteilung: **28.03.2012**
(21) Anmeldenummer: 09009929.2
(22) Anmeldetag: 31.07.2009
(51) Int. Cl.: B65B 31/02, B65B 51/22

(54) **Verpackungsmaschine mit einer Ultraschallvorrichtung**
Packaging machine with an ultrasound device
Machine d'emballage dotée d'un dispositif à ultrasons

(30) Priorität: 01.08.2008 DE 102008035994
(43) Veröffentlichungstag der Anmeldung: 03.02.2010
(73) Patentinhaber: MULTIVAC Sepp Haggenmüller GmbH & Co KG, 87787 Wolfertschwenden (DE)
(72) Erfinder: Ehrmann, Elmar, 87730 Bad Grönenbach (DE); Slomp, Tieme Jan, 87730 Bad Grönenbach (DE); Sparakowski, Roland, 88459 Tannheim (DE)
(74) Vertreter: Grünecker, Kinkeldey, Stockmair & Schwanhäusser

(56) Entgegenhaltungen:
- EP-A- 1 516 816
- EP-A- 1 932 763
- DE-A1-102007 021 967
- FR-A- 2 826 336
- US-A- 5 345 747
- US-A1- 2006 248 860

## Beschreibung

Die vorliegende Erfindung bezieht sich auf eine Verpackungsmaschine mit einer Ultraschallvorrichtung. Die Verpackungsmaschine kann insbesondere eine Tiefziehmaschine sein.

EP 1 110 701 B1 beschreibt ein System zum Verschweißen von Blisterpackungen. Das System hat viele Sonotroden und ein gegenüberliegendes Schweißgesenk, in dem Ausnehmungen definiert sind. Jeder Ausnehmung sind mehrere Sonotroden zugeordnet. Das System versiegelt die Blisterpackungen durch Ultraschallschweißen.

EP 1 510 459 B1 beschreibt ein ähnliches System, das zusätzlich Folienverpackungen durch Schneiden vereinzelt.

EP 1 717 150 A1, DE 10 2005 039 673 A1 und DE 10 2005 039 690 A1 beschreiben jeweils eine Tiefziehmaschine, die Folienverpackungen durch Ultraschallschweißen versiegelt und durch Stanzen vereinzelt.

Eine gattungsgemäße Verpackungsmaschine ist aus der nachveröffentlichten DE 10 2007 021 967 A1 bekannt.

Es ist die Aufgabe der vorliegenden Erfindung, eine Verpackungsmaschine vorzusehen, die besonders haltbare Verpackungen bei erhöhter Taktleistung produzieren kann.

Diese Aufgabe wird durch die Verpackungsmaschine mit den Merkmalen des Anspruchs 1 gelöst. Vorteilhafte Weiterbildungen sind Gegenstand der Unteransprüche.

Das Versiegeln kann mittels Ultraschall im Vakuum und/oder modifizierte Atmosphäre durchgeführt werden. Dadurch werden haltbare Verpackungen produziert, wobei die Taktleistung erhöht ist.

Vorzugsweise wird eine Verpackungsmaschine vorgesehen, bei der das Evakuieren und/oder das Begasen mit modifizierter Atmosphäre, das Siegeln und das Schneiden in einer einzigen Station erfolgen. Dadurch ist die gesamte Verpackungsmaschine in vorteilhafter Weise kompakt.

Vorzugsweise wird eine Sonotrode verwendet, die durch einen verstellbaren Anschlag genau positioniert wird. Dadurch kann in vorteilhafter Weise auf eine Schutzfolie der Sonotrode verzichtet werden.

Vorzugsweise wird ein formvariables Schneidwerkzeug, vorzugsweise Bandstahl als Schneidvorrichtung verwendet. Dadurch kann sie in vorteilhafter Weise einfach ausgetauscht werden, ohne dass ein Austausch eines kompletten Amboss erforderlich ist.

Vorzugsweise ist zwischen einem Transformationszwischenstück und einem Kammeroberteil eine erste Dichtung vorgesehen, die sich in einem Schwingungsknoten der stehenden Welle befindet. Dadurch kann in vorteilhafter Weise die Dichtigkeit sichergestellt werden.

Weitere Merkmale und Zweckmäßigkeiten der Erfindung ergeben sich aus der Beschreibung eines Ausführungsbeispiels anhand der beigefügten Zeichnungen. Von den Figuren zeigen:
- Fig. 1: eine schematische Ansicht von wesentlichen Teilen ei- ner Verpackungsmaschine gemäß der vorliegenden Erfin- dung;
- Fig. 2: eine schematische Schnittansicht einer Ultraschallvor- richtung für die Verpackungsmaschine gemäß der vorlie- genden Erfindung;
- Fig. 3a: eine schematische Einzelheit in der Schnittansicht der Ultraschallvorrichtung für die Verpackungsmaschine ge- mäß der vorliegenden Erfindung bei Verwendung von re- lativ dicken Folien;
- Fig. 3b: eine schematische Einzelheit in der Schnittansicht der Ultraschallvorrichtung für die Verpackungsmaschine ge- mäß der vorliegenden Erfindung bei Verwendung von re- lativ dünnen Folien;
- Fig. 4a: eine Schnittansicht eines Anschlags für eine Sonotrode der Ultraschallvorrichtung für die Verpackungsmaschine gemäß der vorliegenden Erfindung, wobei die Sonotrode in einer angehoben Position ist;

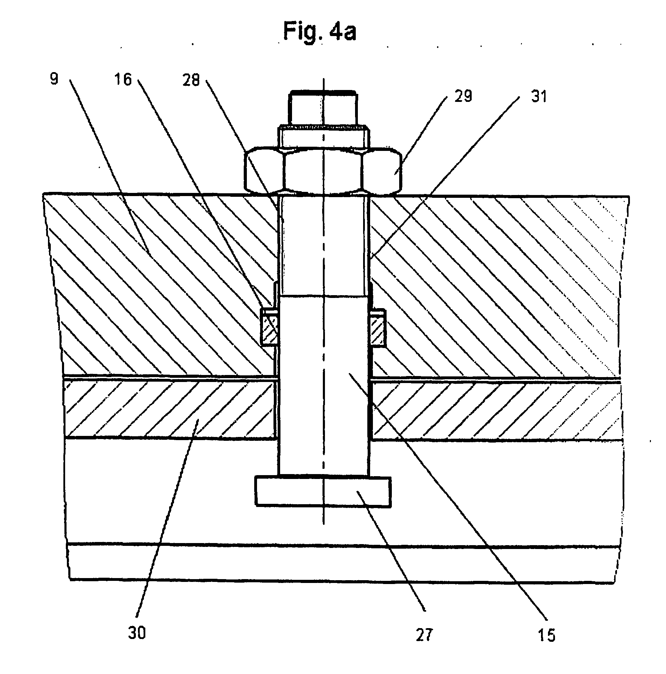

- Fig. 4a: eine Schnittansicht des Anschlags für die Sonotrode, wobei die Sonotrode in einer abgesenkten Position ist;

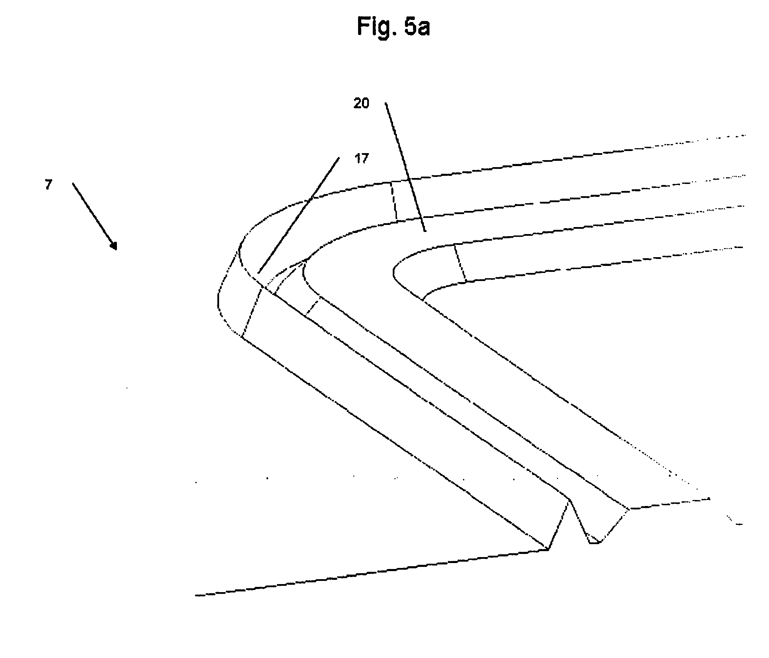

- Fig. 5a: eine ausschnittartige, perspektivische Ansicht eines Amboss der Ultraschallvorrichtung für die Verpackungs- maschine gemäß der vorliegenden Erfindung; und

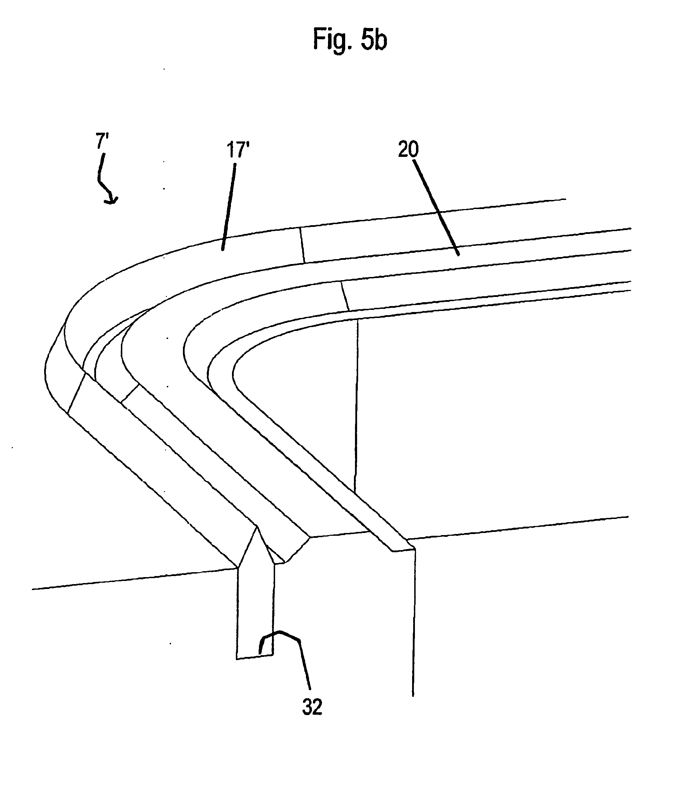

- Fig. 5b: eine ausschnittartige, perspektivische Ansicht des Am- boss gemäß einer abgewandelten Ausführungsform.

Ein Ausführungsbeispiel einer Verpackungsmaschine gemäß der Erfindung wird anhand einer Tiefziehmaschine unter Bezugnahme auf die Figuren beschrieben.

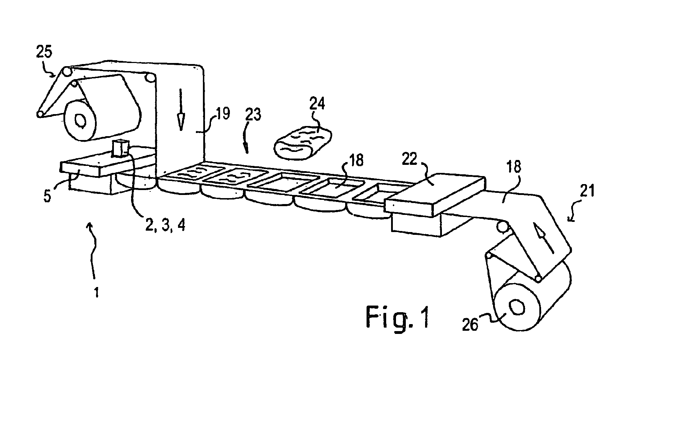

Die Tiefziehmaschine hat gemäß der Fig. 1 eine Unterfolienzuführung 21, eine Formstation 22, eine Füllstation 23, eine Oberfolienzuführung 25 und eine Ultraschallvorrichtung 1 mit integrierter Evakuier-, Begasungs-, Siegel- und Schneidfunktion.

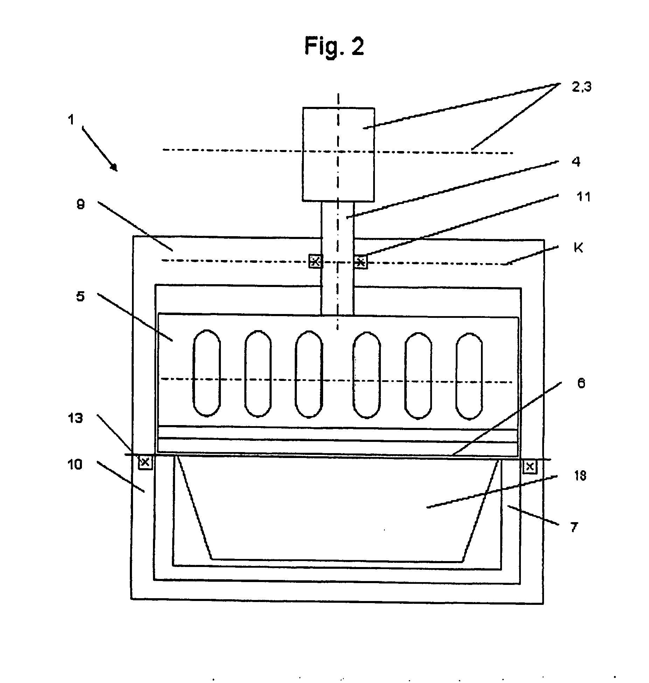

Der Betrieb der Tiefziehmaschine ist folgendermaßen: Zunächst wird eine Unterfolie 18 von der Unterfolienzuführung 21 von einer Unterfolienrolle 26 abgezogen und der Formstation 22 zugeführt. In der Formstation 22 wird die Unterfolie 18 in einem Formwerkzeug erhitzt und zu Packungsmulden tiefgezogen. Die Packungsmulden können ein- oder mehrspurig in der Unterfolie 18 vorgesehen werden. Anschließend wird die Unterfolie 18 in die Füllstation 23 vorgeschoben, in der die entstandenen Packungsmulden von Hand oder automatisch mit Verpackungsgut 24 gefüllt werden. Im nächsten Schritt wird die tiefgezogene und gefüllte Unterfolie 18 in die Ultraschallvorrichtung 1 mit integrierter Evakuier-, Begasungs- Siegel- und Schneidfunktion vorgeschoben. In der Ultraschallvorrichtung 1 wird eine Oberfolie 19 über die Unterfolie 18 gelegt, und die Luft im Inneren einer Evakuierungskammer (Fig. 2) und der darin befindlichen Packung wird abgesaugt bzw. evakuiert und/oder begast. Danach wird die Packung versiegelt, indem die Oberfolie 19 entlang eines Siegelrands der Packung mit der Unterfolie 18 verschweißt wird. Die Versiegelung erfolgt durch Ultraschallschwingungen, die unter Druck auf die Oberfolie 19 übertragen werden, wobei durch Molekular- und Grenzflächenreibung eine zum Erweichen notwendige Schweißwärme erzeugt wird. Durch die örtliche Temperatur beginnen die Oberfolie 19 und/oder die Unterfolie 18 zu erweichen, und sie werden miteinander verschweißt.

Das Schneiden erfolgt gleichzeitig mit dem Siegeln in der Ultraschallvorrichtung 1.

Die Fig. 2 zeigt eine schematische Schnittansicht einer Ultraschallvorrichtung 1 für die Verpackungsmaschine gemäß der vorliegenden Erfindung. Die Ultraschallvorrichtung 1 hat einen Ultraschall-Generator 2, der elektrische Schwingungen erzeugt, einen daran gekoppelten Ultraschall-Konverter 3, der die erzeugten elektrischen Schwingungen in mechanische Schwingungen gleicher Frequenz umwandelt, und ein Transformationszwischenstück 4, das die mechanischen Schwingungen zu einer Sonotrode 5 überträgt. Die Sonotrode 5 hat eine Schall abstrahlende Endfläche 6, an der sie die mechanischen Schwingungen reflektiert, so dass eine stehende Welle zur Einleitung auf die Oberfolie 19 ausgebildet wird. Gemäß der vorliegenden Erfindung ist die Schall abstrahlende Endfläche 6 in einem Vakuum und/oder in einer modifizierten Atmosphäre angeordnet, was später im Einzelnen beschrieben wird.

Die Ultraschallvorrichtung 1 hat des weiteren einen Amboss 7, der gegenüber der Schall abstrahlenden Endfläche 6 der Sonotrode 5 angeordnet ist. Zwischen dem Amboss 7 und der Schall abstrahlenden Endfläche 6 der Sonotrode 5 wird eine Siegelebene einer zu versiegelnden Packung definiert. In der Siegelebene werden die Unterfolie 18 und die Oberfolie 19 mittels Ultraschall miteinander verschweißt und geschnitten.

Die Sonotrode 5 wird über eine nicht gezeigte Antriebsvorrichtung angehoben und abgesenkt, so dass sie sich relativ zu dem Amboss 6 hin und von diesem weg bewegt.

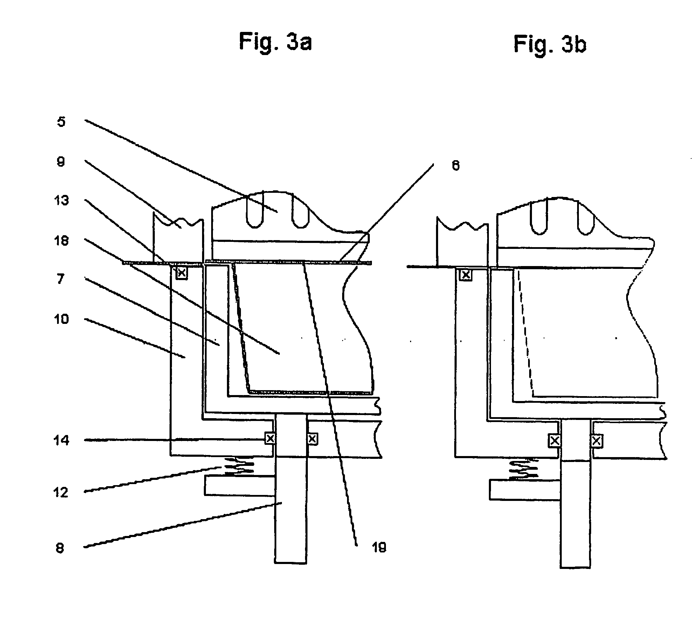

Die Figuren 3a und 3b zeigen jeweils eine schematische Einzelheit in der Schnittansicht der Ultraschallvorrichtung 1 für die Verpackungsmaschine gemäß der vorliegenden Erfindung. Zwischen dem Amboss 7 und der Schall abstrahlenden Endfläche 6 der Sonotrode 5 ist die Siegelebene der zu versiegelnden Verpackung erkennbar. In der Siegelebene werden die Unterfolie 18 und die Oberfolie 19 mittels Ultraschall aneinander verschweißt.

Der Amboss 7 ist über eine Hubvorrichtung 8 zu der Sonotrode 5 hin und von der Sonotrode 5 weg bewegbar. Der Amboss 7 ist starr mit der Hubvorrichtung 8 verbunden.

Wie dies in den Figuren 2, 3a und 3b gezeigt ist, hat die Ultraschällvorrichtung 1 des weiteren die Evakuierungskammer, die durch ein Kammeroberteil 9 und ein bewegbares Kammerunterteil 10 gebildet ist. Die Sonotrode 5 und der Amboss 7 sind in der Evakuierungskammer angeordnet, und das Transformationszwischenstück 4 durchdringt das Kammeroberteil 9. Zwischen dem Transformationszwischenstück 4 und dem Kammeroberteil 9 ist eine erste Dichtung 11 vorgesehen, die sich in einem Schwingungsknoten K der stehenden Welle befindet. Dadurch wird in vorteilhafter Weise die Dichtigkeit der ersten Dichtung 11 verbessert, da an der ersten Dichtung 11 keine oder nur eine geringe Relativbewegung auftritt.

Das bewegbare Kammerunterteil 10 ist über die Hubvorrichtung 8 zu dem Kammeroberteil 9 hin und von diesem weg bewegbar, wobei zwischen der Hubvorrichtung 8 und dem Kammerunterteil 10 ein federndes Element 12 vorgesehen ist, das das bewegbare Kammerunterteil 10 federnd an das Kammeroberteil 9 drückt. Die Unterfolie 18 und die Oberfolie 19 werden zwischen dem Kammeroberteil 9 und dem bewegbaren Kammerunterteil 10 eingeklemmt, wenn das Kammerunterteil 10 zu dem Kammeroberteil bewegt wurde. Durch das federnde Element 12 können Änderungen der Foliendicken ausgeglichen werden. Dabei können relativ dicke Folien 18, 19 verwendet werden, wie dies in der Fig. 3a gezeigt ist, und es können relativ dünne Folien 18, 19 verwendet werden, wie dies in der Fig. 3b gezeigt ist. Als das federnde Element 12 kann eine Gummiauflage verwendet werden, die sich z.B. über eine Platte an der Hubvorrichtung 8 abstützt.

Zwischen dem Kammeroberteil 9 und dem Kammerunterteil 10 ist eine zweite Dichtung 13 angeordnet. Alternativ kann die zweite Dichtung 13 die Funktion des federnden Elements 12 übernehmen, z.B. wenn die zweite Dichtung 13 als ringförmige Silikondichtung ausgebildet ist. In diesem Fall kann das federnde Element 12 als separates Bauteil entfallen.

Die Hubvorrichtung 8 durchdringt das Kammerunterteil 10, und zwischen der Hubvorrichtung 8 und dem Kammerunterteil 10 ist eine dritte Dichtung 14 angeordnet.

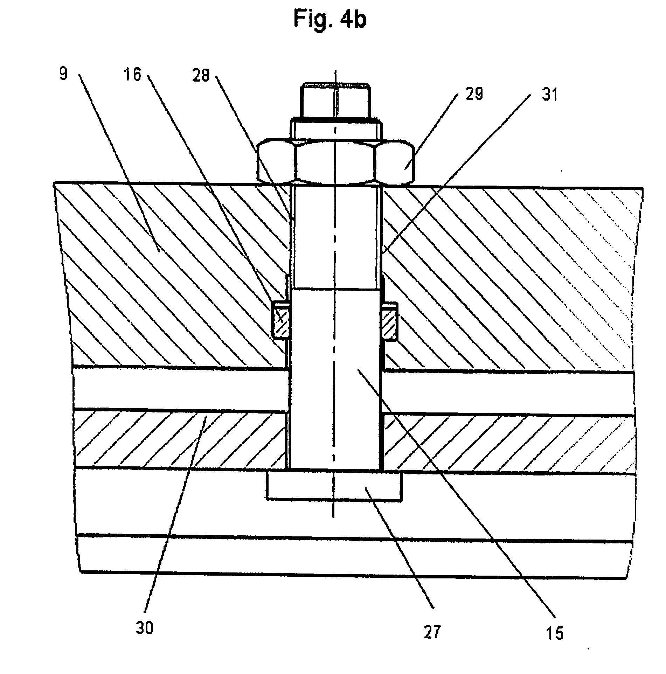

Die Fig. 4a zeigt eine Schnittansicht eines verstellbaren Anschlags 15 für die Sonotrode 5 der Ultraschallvorrichtung 1 gemäß der Fig. 2, wobei die Sonotrode 5 durch die nicht gezeigte Antriebsvorrichtung in ihre angehobene Position angehoben wurde. Die Fig. 4b zeigt eine Schnittansicht des verstellbaren Anschlags 15 für die Sonotrode 5 der Ultraschallvorrichtung 1 gemäß der Fig. 2, wobei die Sonotrode 5 in der abgesenkten Position ist, in der sie an dem Anschlag 15 aufliegt. Das Bezugszeichen 30 in den Figuren 4a und 4b bezeichnet einen Sonotrodenhalter, an dem die Sonotrode 5 befestigt ist und der sich einstückig mit der Sonotrode 5 bewegt. Die Position der Sonotrode 5 ist relativ zu dem Kammeroberteil 9 und daher auch relativ zu dem Amboss 7 durch den verstellbaren Anschlag 15 variabel einstellbar. Der verstellbare Anschlag 15 ist am Kammeroberteil 9 variabel fixierbar. Bei dem Ausführungsbeispiel gemäß den Figuren 4a und 4b ist der Anschlag 15 durch einen Bolzen 15 ausgeführt, der ein Außengewinde 28 aufweist. Der Bolzen 15 ist in ein entsprechendes Innengewinde 31 einer oberen Wand des Kammeroberteils 9 geschraubt. An einem Ende des Bolzens 15 befindet sich ein Bolzenkopf 27. Das andere Ende des Bolzens steht von einer oberen Fläche des Kammeroberteils 9 vor. Eine Kontermutter 29 ist an das Außengewinde 28 des Bolzens 15 geschraubt und hält diesen an dem Kammeroberteil 9. Durch Drehen der Kontermutter 29 kann der Anschlag 15, d.h. der Bolzen fixiert werden. Die Sonotrode 5 liegt über den Sonotrodenhalter 30 auf einer Anschlagsfläche des Bolzens 15 auf, die durch den Bolzenkopf 27 definiert wird. Beim Verstellen des Bolzens 15 werden demnach der Sonotrodenhalter 30 und die Sonotrode 5 in gleicher Weise versetzt.

Zwischen dem Anschlag 15, d.h. zwischen dem Bolzen 15 und dem Kammeroberteil 9 ist eine vierte Dichtung 16 angeordnet.

Die Anzahl der Anschläge 15 kann eins oder mehr betragen. Bei drei oder vier Anschlägen 15 kann die Sonotrode 5 dreidimensional ausgerichtet werden.

Die Fig. 5a zeigt eine perspektivische Ansicht eines Amboss 7. Der Amboss 7 hat eine Schneidvorrichtung 17, die mit der Sonotrode 5 zusammenwirkt, um die Unterfolie 18 und die Oberfolie 19 mittels Ultraschall zu schneiden. Die Form der Schneidvorrichtung 17 ist an die Außenform der einzelnen Verpackungen angepasst.

Die Fig. 5b zeigt eine ausschnittartige, perspektivische Ansicht eines Amboss 7' gemäß einer abgewandelten Ausführungsform. Die Schneidvorrichtung 17' ist hierbei formvariabel wie z.B. ein Bandstahl, der in eine entsprechende Nut 32 im Amboss 7' eingepasst ist. Der Bandstahl ist bei Bedarf leicht auszuwechseln, wobei nicht der komplette Amboss 7' ausgetauscht werden muss.

Der Amboss 7, 7' hat des weiteren einen erhabenen Abschnitt 20, der in Zusammenwirkung mit der Schall abstrahlenden Endfläche 6 eine Siegelkontur innerhalb der Siegelebene definiert. Der erhabene Abschnitt 20 ist an die gewünschte Siegelnaht der Verpackungen angepasst. Bei dem gezeigten Ausführungsbeispiel ist der erhabene Abschnitt 20 im wesentlichen kontinuierlich.

Bevor die Ultraschallvorrichtung 1 gemäß der Fig. 2 in Betrieb gesetzt wird, muss die Position der Sonotrode 5 bezüglich des Amboss 6 eingestellt werden. Hierfür wird der Amboss 7 in seine fest voreingestellte Betriebsposition, in der das Ultraschallschweißen und das Schneiden durchgeführt wird, nach oben gefahren und fixiert. Nun wird die Sonotrode 5 durch ihre nicht gezeigte Antriebsvorrichtung abgesenkt, so dass sie ihre abgesenkte Position gemäß der Fig. 4b einnimmt. Der Sonotrodenhalter 30 liegt an dem Kopf 27 des Bolzens 15 auf. Anschließend wird der Bolzen 15 bezüglich des Kammeroberteils 9 manuell hinein oder heraus gedreht, bis die Schall abstrahlende Endfläche 6 der Sonotrode 5 die Schneidvorrichtung 17 gerade nicht berührt. Vorzugsweise wird bei diesem Vorgang der Ultraschall-Generator 2 eingeschaltet, so dass die Amplitude der Schall abstrahlenden Endfläche 6 bei der Einstellung berücksichtigt werden kann. Nun wird die Kontermutter 29 festgezogen, um den Anschlag 15 bzw. den Bolzen 15 an dem Kammeroberteil 9 zu fixieren.

Bei mehreren Bolzen 15 wird der Vorgang entsprechend wiederholt.

Unabhängig von dieser Einstellung verbleibt die erste Dichtung 11 im wesentlichen im Schwingungsknoten K der stehenden Welle, da die Wellenlänge der stehenden Welle im Vergleich mit dem Einstellbereich des Bolzens 15 ausreichend groß ist. Gegebenenfalls kann die Betriebsposition des Amboss 7 über die Ansteuerung der Hubvorrichtung 8 verändert werden, damit sich die erste Dichtung 11 im Schwingungsknoten K der stehenden Welle befindet und die Schneidvorrichtung 17 die Schall abstrahlende Endfläche 6 gerade nicht berührt.

Üblicherweise haben Sonotroden eine Schutzfolie an der Schall abstrahlenden Endfläche 6. Die Schutzfolie verhindert einen Verschleiß an der Schall abstrahlenden Endfläche 6 und an der Schneidvorrichtung 17 infolge des Ultraschallschweißens. Die vorliegende Erfindung hat den Vorteil, dass eine derartige Schutzfolie entfallen kann, da die Schneidvorrichtung 17 die Schall abstrahlende Endfläche 6 gerade nicht berührt. Dieser Vorteil wird durch den verstellbaren Anschlag 15 ermöglicht, der die Position der Sonotrode 5 relativ zu dem Kammeroberteil 9 variabel einstellt, die wiederum an die fest voreingestellte Betriebsposition des Amboss 7 exakt angepasst ist. Infolge dieser Einstellmöglichkeit kann eine vereinfachte und kostengünstige Sonotrode 5 vorgesehen werden.

Nachdem die Voreinstellung der Sonotrode 5 durchgeführt wurde, kann der eigentliche Betrieb der Verpackungsmaschine gestartet werden. Dabei ist der Betrieb der Ultraschallvorrichtung 1 gemäß der Fig. 2 folgendermaßen:

Wenn der Siegelprozess durchgeführt wird, wird zuerst der Amboss 7 über die Hubvorrichtung 8 an seine fest voreingestellte Betriebsposition angehoben. Gleichzeitig wird das Kammerunterteil 10 gegen das Kammeroberteil 9 verfahren, so dass das Kammerunterteil 10 federnd an dem Kammeroberteil 9 anliegt. In den Figuren 3a und 3b ist dargestellt, wie zumindest die Oberfolie 19 dann zwischen dem Kammerunterteil 10 und dem Kammeroberteil 9 eingeklemmt und abgedichtet ist. Aufgrund der Elastizität des federnden Elements 12 spielt es keine Rolle, ob dicke oder dünne Folien 18, 19 verwendet werden. Die Evakuierungskammer ist außerdem durch die zweite Dichtung 13 an den der Trennebene von Kammeroberteil 9 und Kammerunterteil 10 abgedichtet.

Im nächsten Schritt erfolgt die Evakuierung der Evakuierungskammer, indem die Luft aus der Evakuierungskammer abgesaugt wird. Danach kann die Evakuierungskammer mit einer Schutzgasatmosphäre gefüllt werden, sofern dies gewünscht ist.

Anschließend wird die Sonotrode 5 durch die nicht gezeigte Antriebsvorrichtung von der angehobenen Position gemäß der Fig. 4a in die abgesenkte Position gemäß der Fig. 4b abgesenkt, so dass der Sonotrodenhalter 30 an dem Kopf 27 des Bolzens 15 aufliegt. Diese abgesenkte Position gemäß der Fig. 4b definiert die Siegelposition, in der das Siegeln durchgeführt werden soll. Der durch die nicht gezeigte Antriebsvorrichtung bewirkte Hubweg ist deutlich kleiner als die Wellenlänge der stehenden Welle, so dass die Dichtung 11 im wesentlichen im Schwingungsknoten der stehenden Welle verbleibt.

Im nächsten Schritt erfolgt das Versiegeln und Schneiden. Der Amboss 7 wurde über die Hubvorrichtung 8 bereits zu seiner Betriebsposition zu der Sonotrode 5 hin bewegt (in der die Schneidvorrichtung 17 die Schall abstrahlende Endfläche 6 gerade nicht berührt). Der Ultraschall-Generator 2 wird eingeschaltet. Dadurch erfolgt das Ultraschallschweißen der Oberfolie 19 mit der Unterfolie 18, und gleichzeitig werden die einzelnen Verpackungen durch die Schneidvorrichtung 17 getrennt.

Danach wird die Evakuierungskammer belüftet, und der Amboss 7 und das Kammerunterteil 10 werden über die Hubvorrichtung 8 nach unten gefahren. Die Sonotrode 5 wird in ihre angehobene Position gemäß der Fig. 4a angehoben. Die Oberfolie 19 und die Unterfolie 18 werden freigesetzt und aus der Ultraschallvorrichtung 1 heraus vorgeschoben. Der Oberfolienrest wird durch eine nicht dargestellte Folienrestaufwicklung beseitigt. Die Packungen werden daraufhin durch eine nicht gezeigte Vorrichtung oder manuell entnommen.

Die Verpackungsmaschine arbeitet taktweise. Am Ende jedes Taktes rückt die Unterfolie 18 dabei um eine Abzugslänge weiter. Pro Takt wird der vorstehend beschriebene Betrieb intermittierend wiederholt.

Bei dem dargestellten Ausführungsbeispiel werden mehrere Dichtungen verwendet, die an bewegbaren Teilen anliegen. Vorzugsweise werden daher Lippendichtungen verwendet.

Die Breite der ersten Dichtungen 11 ist vorzugsweise so ausgelegt, dass sie sich unter Berücksichtung der Verschiebung der Sonotrode 5 mit dem Schwingungsknoten der stehenden Welle überlappt.

Die vorliegende Erfindung ist nicht auf das dargestellte Ausführungsbeispiel beschränkt, sondern es sind viele Abwandlungen denkbar.

Als Abwandlung zu dem dargestellten Ausführungsbeispiel können die jeweiligen Dichtung auch am entsprechenden Gegenstück angebracht sein, d.h. die erste Dichtung 11 kann am Transformationszwischenstück 4 angebracht sein, die zweite Dichtung 13 kann am Kammeroberteil 9 angebracht sein, die dritte Dichtung 14 kann an der Hubvorrichtung 8 angebracht sein, und die vierte Dichtung 16 kann am verstellbaren Anschlag 15 angebracht sein.

Auch wenn dies nicht in der Fig. 5 gezeigt ist, hat der Amboss 7 vorzugsweise um die Schneidvorrichtung 17 herum angeordnete Düsen, die die Unterfolie 18 durchstechen oder mit bereits in der Unterfolie 18 eingebrachten Löchern fluchten, wenn der Amboss 7 in seiner Betriebsposition ist. Die Düsen sind mit einer nicht dargestellten Evakuierungs- und/oder Begasungsvorrichtung in Verbindung und ermöglichen das Evakuieren und/oder die Begasung des Verpackungsinneren mit der modifizierten Atmosphäre wie z.B. Schutzgas.

Vorzugsweise kann die zweite Dichtung 13 die Funktion des federnden Elements 12 übernehmen, z.B. wenn die zweite Dichtung 13 als ringförmige Silikondichtung ausgebildet ist. In diesem Fall kann das federnde Element 12 als separates Bauteil entfallen.

Bei dem Ausführungsbeispiel ist der Amboss 7 starr mit der Hubvorrichtung 8 verbunden, und das Kammerunterteil 10 ist über das federnde Element 12 mit der Hubvorrichtung 8 verbunden. Alternativ kann der Amboss 6 fest mit dem Kammerunterteil 10 und der Hubvorrichtung 8 verbunden sein. In diesem Fall entfallen das federnde Element 12 und außerdem die dritte Dichtung 14. Gleichzeitig übernimmt die zweite Dichtung 13 den Ausgleich der unterschiedlichen Foliendicken, indem die zweite Dichtung 13 elastisch verformt wird, wenn das Kammerunterteil 10 zu dem Kammeroberteil 9 bewegt wurde. Bei dicken Folien wird die zweite Dichtung 13 stärker komprimiert als bei dünnen Folien.

Der Schutzumfang beschränkt sich nicht auf das dargestellte Ausführungsbeispiel, sondern er umfasst weitere Änderungen und Abwandlungen, sofern diese innerhalb des durch die beigefügten Ansprüche definierten Umfangs fallen.

## Patentansprüche

1. Verpackungsmaschine mit einer Ultraschallvorrichtung (1), wobei die Ultraschallvorrichtung (1) Folgendes aufweist:
einen Ultraschall-Generator (2), der elektrische Schwingungen erzeugt;
einen Ultraschall-Konverter (3), der die erzeugten elektrischen Schwingungen in mechanische Schwingungen gleicher Frequenz umwandelt; und
ein Transformationszwischenstück (4), das die mechanischen Schwingungen zu einer Sonotrode (5) überträgt,
**dadurch gekennzeichnet,**
**dass** die Sonotrode (5) eine Schall abstrahlende Endfläche (6) aufweist, an der sie die mechanischen Schwingungen reflektiert, so dass eine stehende Welle zur Einleitung in eine Verpackungsfolie (18, 19) ausgebildet wird, und
**dass** die Schall abstrahlende Endfläche (6) in einem Vakuum oder modifizierter Atmosphäre angeordnet ist.

2. Verpackungsmaschine gemäß Anspruch 1, wobei
die Ultraschallvorrichtung (1) des weiteren einen Amboss (7, 7') aufweist, der gegenüber der Schall abstrahlenden Endfläche (6) der Sonotrode (5) angeordnet ist, und
zwischen dem Amboss (7, 7') und der Schall abstrahlenden Endfläche (6) der Sonotrode (5) eine Siegelebene einer zu versiegelnden Packung definiert wird.

3. Verpackungsmaschine gemäß Anspruch 2, wobei
der Amboss (7, 7') über eine Hubvorrichtung (8) zu der Schall abstrahlenden Endfläche (6) der Sonotrode (5) hin und von dieser weg bewegbar ist.

4. Verpackungsmaschine gemäß Anspruch 2 oder 3, wobei
die Ultraschallvorrichtung (1) des weiteren eine Evakuierungskammer aufweist, die durch ein Kammeroberteil (9) und ein bewegbares Kammerunterteil (10) gebildet ist,
die Schall abstrahlende Endfläche (6) der Sonotrode (5) und der Amboss (7, 7') in der Evakuierungskammer angeordnet sind;
das Transformationszwischenstück (4) das Kammeroberteil (9) durchdringt, und
zwischen dem Transformationszwischenstück (4) und dem Kammeroberteil (9) eine erste Dichtung (11) vorgesehen ist, die sich in einem Schwingungsknoten (K) der stehenden Welle befindet.

5. Verpackungsmaschine gemäß Ansprüchen 3 und 4, wobei
das bewegbare Kammerunterteil zu dem Kammeroberteil hin und von diesem weg bewegbar ist,
der Amboss fest mit dem Kammerunterteil und der Hubvorrichtung verbunden ist, und
zwischen dem Kammeroberteil und dem Kammerunterteil eine elastische, zweite Dichtung angeordnet ist.

6. Verpackungsmaschine gemäß Anspruch 4, wobei
das bewegbare Kammerunterteil (10) zu dem Kammeroberteil (9) hin und von diesem weg bewegbar ist,
ein federndes Element (12) vorgesehen ist, die das bewegbare Kammerunterteil (10) federnd an das Kammeroberteil (9) drückt, und
zwischen dem Kammeroberteil (9) und dem Kammerunterteil (10) eine zweite Dichtung (13) angeordnet ist.

7. Verpackungsmaschine gemäß Ansprüchen 3, 4 und 6, wobei
der Amboss (7, 7') starr mit der Hubvorrichtung (8) verbunden ist, und
das Kammerunterteil (10) über das federnde Element (12) mit der Hubvorrichtung (8) verbunden ist.

8. Verpackungsmaschine gemäß Ansprüchen 3 und 4, wobei
die Hubvorrichtung (8) das Kammerunterteil (10) durchdringt,
und
zwischen der Hubvorrichtung (8) und dem Kammerunterteil (10) eine dritte Dichtung (14) angeordnet ist.

9. Verpackungsmaschine gemäß einem der Ansprüche 4 bis 8, wobei
eine Position der Sonotrode (5) relativ zu dem Kammeroberteil (9) durch einen verstellbaren Anschlag (15) variabel einstellbar ist.

10. Verpackungsmaschine gemäß Anspruch 9, wobei
der verstellbare Anschlag (15) ein am Kammeroberteil (9) variabel fixierbarer Bolzen (15) ist, und
zwischen dem Bolzen (15) und dem Kammeroberteil (9) eine vierte Dichtung (16) angeordnet ist.

11. Verpackungsmaschine gemäß einem der Ansprüche 2 bis 10, wobei
der Amboss (7, 7') eine erhabene Schneidvorrichtung (17, 17') aufweist, die mit der Schall abstrahlenden Endfläche (6) der Sonotrode (5) zusammenwirkt, um die Verpackungsfolie (18, 19) mittels Ultraschall zu schneiden.

12. Verpackungsmaschine gemäß einem der Ansprüche 2 bis 11, wobei
der Amboss (7, 7') einen erhabenen Abschnitt (20) aufweist, der eine Siegelkontur innerhalb der Siegelebene definiert.

13. Verpackungsmaschine gemäß Anspruch 12, wobei der erhabene Abschnitt (20) im wesentlichen kontinuierlich ist.

14. Verpackungsmaschine gemäß einem der Ansprüche 4 bis 13, des weiteren mit
einer Begasungsvorrichtung, die ein Inneres der Verpackungsfolien (18, 19) mit der modifizierten Atmosphäre, vorzugsweise mit einem Schutzgas begast.

## Claims

1. A packaging machine with an ultrasonic device (1), wherein the ultrasonic device (1) has the following:
an ultrasonic generator (2) which generates electric vibrations;
an ultrasonic converter (3) which converts the generated electric vibrations into mechanical vibrations of the same frequency, and
a transforming adapter (4) which transmits the mechanical vibrations to a sonotrode (5),
**characterised in**
**that** the sonotrode (5) has a sound-radiating end surface (6) on which it reflects the mechanical vibrations so that a standing wave is formed to be directed into a packaging film (18,19), and in that the sound-radiating end surface (6) is disposed in a vacuum or modified atmosphere.

2. A packaging machine according to Claim 1, wherein
the ultrasonic device (1) also has an anvil (7,7') which is disposed opposite the sound-radiating end surface (6) of the sonotrode (5), and
a sealing plane of a package to be sealed is defined between the anvil (7,7') and the sound-radiating end surface (6) of the sonotrode (5).

3. A packaging machine according to Claim 2, wherein
the anvil (7,7') can be moved via a lifting device (8) towards and away from the sound-radiating end surface (6) of the sonotrode (5).

4. A packaging machine according to Claim 2 or 3, wherein
the ultrasonic device (1) further has an evacuation chamber which is formed by a chamber upper part (9) and a movable chamber lower part (10),
the sound-radiating end surface (6) of the sonotrode (5) and the anvil (7,7') are disposed in the evacuation chamber;
the transforming adapter (4) penetrates the chamber upper part (9), and
a first seal (11) is provided between the transforming adapter (4) and the chamber upper part (9), which seal is situated in a vibration node (K) of the standing wave.

5. A packaging machine according to Claims 3 and 4, wherein
the movable chamber lower part can be moved towards and away from the chamber upper part,
the anvil is securely connected to the chamber lower part and the lifting device, and
an elastic second seal is disposed between the chamber upper part and the chamber lower part.

6. A packaging machine according to Claim 4, wherein
the movable chamber lower part (10) can be moved towards and away from the chamber upper part (9),
a resilient element (12) is provided which presses the movable chamber lower part (10) resiliently against the chamber upper part (9), and
a second seal (13) is disposed between the chamber upper part (9) and the chamber lower part (10).

7. A packaging machine according to Claims 3,4 and 6, wherein
the anvil (7,7') is rigidly connected to the lifting device (8),
and
the chamber lower part (10) is connected to the lifting device (8) via the resilient element (12).

8. A packaging machine according to Claims 3 and 4, wherein
the lifting device (8) penetrates the chamber lower part (10),
and
a third seal (14) is disposed between the lifting device (8) and the chamber lower part (10).

9. A packaging machine according to any one of Claims 4 to 8, wherein
a position of the sonotrode (5) relative to the chamber upper part (9) can be variably adjusted by an adjustable stop member (15).

10. A packaging machine according to Claim 9, wherein
the adjustable stop member (15) is a bolt (15) which can be variably located on the chamber upper part (9), and
a fourth seal (16) is disposed between the bolt (15) and the chamber upper part (9).

11. A packaging machine according to any one of Claims 2 to 10, wherein
the anvil (7,7') has a raised cutting device (17,17') which cooperates with the sound-radiating end surface (6) of the sonotrode (5) so as to cut the packaging film (18,19) by means of ultrasound.

12. A packaging machine according to any one of Claims 2 to 11, wherein
the anvil (7,7') has a raised portion (20) which defines a sealing contour within the sealing plane.

13. A packaging machine according to Claim 12, wherein the raised portion (20) is substantially continuous.

14. A packaging machine according to any one of Claims 4 to 13, further having
a gas-injection device which gases an interior of the packaging films (18,19) with the modified atmosphere, preferably with a protective gas.

## Revendications

1. Machine d'emballage avec un dispositif à ultrasons (1), étant précisé que le dispositif à ultrasons (1) comporte ce qui suit :
un générateur d'ultrasons (2) qui génère des vibrations électriques ;
un convertisseur d'ultrasons (3) qui transforme les vibrations électriques générées en vibrations mécaniques de même fréquence ; et
un élément intermédiaire de transformation (4) qui transmet les vibrations mécaniques à une sonotrode (5),
**caractérisée en ce que** la sonotrode (5) présente une surface d'extrémité de rayonnement du son (6) sur laquelle elle réfléchit les vibrations mécaniques, de sorte qu'il se forme une onde stationnaire à introduire dans un film d'emballage (18, 19), et
**en ce que** la surface d'extrémité de rayonnement du son (6) est disposée dans un vide ou dans une atmosphère modifiée.

2. Machine d'emballage selon la revendication 1, étant précisé
que le dispositif à ultrasons (1) comporte par ailleurs une enclume (7, 7') qui est disposée en face de la surface d'extrémité de rayonnement de son (6) de la sonotrode (5), et
qu'un plan de scellage d'un emballage à sceller est défini entre l'enclume (7, 7') et la surface d'extrémité de rayonnement de son (6) de la sonotrode (5).

3. Machine d'emballage selon la revendication 2, étant précisé
que l'enclume (7, 7') est apte à être rapprochée et éloignée de la surface d'extrémité de rayonnement du son (6) de la sonotrode (5) par l'intermédiaire d'un dispositif de levage (8).

4. Machine d'emballage selon la revendication 2 ou 3, étant précisé
que le dispositif à ultrasons (1) comporte par ailleurs une chambre d'évacuation qui est formée par une partie de chambre supérieure (9) et une partie de chambre inférieure mobile (10),
que la surface d'extrémité de rayonnement de son (6) de la sonotrode (5) et l'enclume (7, 7') sont disposée dans la chambre d'évacuation ;
que l'élément intermédiaire de transformation (4) traverse la partie de chambre supérieure (9), et
qu'il est prévu entre l'élément intermédiaire de transformation (4) et la partie de chambre supérieure (9) un premier joint d'étanchéité (11) qui se trouve dans un noeud de vibration (K) de l'onde stationnaire.

5. Machine d'emballage selon les revendications 3 et 4, étant précisé que la partie de chambre inférieure mobile est apte à être rapprochée et éloignée de la partie de chambre supérieure,
que l'enclume est reliée solidement à la partie de chambre inférieure et au dispositif de levage, et
qu'il est prévu entre la partie de chambre supérieure et la partie de chambre inférieure un deuxième joint d'étanchéité élastique.

6. Machine d'emballage selon la revendication 4, étant précisé
que la partie de chambre inférieure mobile (10) est apte à être rapprochée et éloignée de la partie de chambre supérieure (9),
qu'il est prévu un élément à ressort (12) qui presse de manière élastique la partie de chambre inférieure mobile (10) contre la partie de chambre supérieure (9), et
qu'il est prévu entre la partie de chambre supérieure (9) et la partie de chambre inférieure (10) un deuxième joint d'étanchéité (13).

7. Machine d'emballage selon les revendications 3, 4 et 6, étant précisé
que l'enclume (7, 7') est reliée rigidement au dispositif de levage (8), et
que la partie de chambre inférieure (10) est reliée au dispositif de levage (8) par l'intermédiaire de l'élément à ressort (12).

8. Machine d'emballage selon les revendications 3 et 4, étant précisé
que le dispositif de levage (8) traverse la partie de chambre inférieure (10), et
qu'il est prévu entre le dispositif de levage (8) et la partie de chambre inférieure (10) un troisième joint d'étanchéité (14).

9. Machine d'emballage selon l'une des revendications 4 à 8, étant précisé
qu'une position de la sonotrode (5) par rapport à la partie de chambre supérieure (9) est réglable de manière variable par une butée réglable (15).

10. Machine d'emballage selon la revendication 9, étant précisé
que la butée réglable (15) est constituée par une tige (15) apte à être fixée de manière variable à la partie de chambre supérieure (9), et
qu'il est prévu entre la tige (15) et la partie de chambre supérieure (9) un quatrième joint d'étanchéité (16).

11. Machine d'emballage selon l'une des revendications 2 à 10, étant précisé
que l'enclume (7, 7') comporte un dispositif de coupe saillant (17, 17') qui coopère avec la surface d'extrémité de rayonnement du son (6) de la sonotrode (5) pour couper le film d'emballage (18, 19) à l'aide d'ultrasons.

12. Machine d'emballage selon l'une des revendications 2 à 11, étant précisé
que l'enclume (7, 7') présente une partie saillante (20) qui définit un contour de scellage à l'intérieur du plan de scellage.

13. Machine d'emballage selon la revendication 12, étant précisé que la partie saillante (20) est globalement continue.

14. Machine d'emballage selon l'une des revendications 4 à 13, comportant par ailleurs
un dispositif de gazéification qui injecte à l'intérieur des films d'emballage (18, 19) l'atmosphère modifiée, de préférence un gaz protecteur.
